# EUROPÄISCHE PATENTSCHRIFT

(11) **EP 2 280 440 B1**
(45) Veröffentlichungstag und Bekanntmachung des Hinweises auf die Patenterteilung: **26.09.2012**
(21) Anmeldenummer: 09166816.0
(22) Anmeldetag: 30.07.2009
(51) Int. Cl.: H01M 8/04, H01M 8/06, H01M 8/24

(54) **Brennstoffzellenvorrichtung mit mehreren Kaskadenstufen**
Fuel cell device with several cascade steps
Dispositif de cellules de combustible doté de plusieurs étapes en cascade

(43) Veröffentlichungstag der Anmeldung: 02.02.2011
(73) Patentinhaber: SIEMENS AKTIENGESELLSCHAFT, 80333 München (DE)
(72) Erfinder: Brandt, Torsten, 91301, Forchheim (DE); Bärnreuther, Frank, 90419, Nürnberg (DE); Hammerschmidt, Albert, 91056, Erlangen (DE); Lersch, Josef, 91336, Heroldsbach (DE); Mahnke, Thomas, 91052, Erlangen (DE); Mattejat, Arno, 91056, Erlangen (DE); Stühler, Walter, 96114, Hirschaid (DE); Voitlein, Ottmar, 91475, Lonnerstadt (DE)

(56) Entgegenhaltungen:
- EP-A- 1 571 723
- EP-A- 1 942 544
- WO-A-02/27849
- WO-A-03/010845
- WO-A-03/030291
- WO-A-2008/101921

## Beschreibung

Die Erfindung betrifft eine Brennstoffzellenvorrichtung mit mehreren nacheinander von einem Betriebsgas durchströmten Kaskadenstufen mit Brennstoffzellen, die jeweils eine von dem Betriebsgas durchströmte Gasverteilungsstruktur umfassen, und mit einer von einer vorhergehenden Kaskadenstufe zu einer nachfolgenden Kaskadenstufe geführten Gaszuführung für das Betriebsgas; eine derartige Brennstoffzellenvorrichtung ist z.B. aus der EP 0 596 366 B1 bekannt.

Bei größeren Brennstoffzellenvorrichtungen ist die gute Ausnutzung von Betriebsgas, das neben reagierenden Bestandteilen auch inerte Gasanteile aufweist, die in den Brennstoffzellen nicht verbraucht werden und deshalb aus der Brennstoffzellenvorrichtung entfernt werden müssen, von großer Bedeutung. Hierzu hat sich eine in der EP 0 596 366 B1 beschriebene Kaskadierung gut bewährt, bei der das jeweilige Betriebsgas (wasserstoffhaltiges oder sauerstoffhaltiges Gas) nacheinander mehrere Kaskadenstufen durchströmt, die eine abnehmende Zahl von parallel geschalteten Brennstoffzellen bzw. deren Gasräume aufweisen. In der letzten Kaskadenstufe, die üblicherweise aus einer oder mehrerer sogenannter Spülzellen besteht, ist die Inertgaskonzentration am höchsten. Steigt die Inertgaskonzentration über einen vorgegebenen Wert, so werden diese Spülzellen von Betriebsgas durchströmt und das Inertgas wird durch ein Ventil ausgetragen.

Innerhalb der Kaskadenstufen entsteht durch die Reaktion von Wasserstoff (H₂) und Sauerstoff (O₂) an einem Elektrolyten Produktwasser, das zusammen mit auskondensiertem Befeuchtungswasser üblicherweise mit dem Betriebsgas aus der Kaskadenstufe ausgetragen wird. Zur Abtrennung dieses Wassers aus dem Betriebsgas ist deshalb von Vorteil in einer Gaszuführung von einer vorhergehenden Kaskadenstufe zu einer nachfolgenden Kaskadenstufe ein Wasserabscheider angeordnet. Ein derartiger Wasserabscheider ist beispielsweise in der WO 03/030291 A2 offenbart.

Eine Brennstoffzelle umfasst dabei üblicherweise einen iondurchlässigen Elektrolyten (im Fall eine PEM-Brennstoffzelle eine Polymerelektrolyt-Membran), zu beiden Seiten jeweils eine Katalysatorschicht und auf diese wiederum folgend jeweils eine Gasverteilerstruktur, die manchmal auch als Gasverteilersubstrat oder -träger bezeichnet wird. Die Gasverteilungsstruktur soll dem Betriebsgas eine guten Zugang zu der Katalysatorschicht ermöglichen, das Ausbringen von Wasser und Inertgasen von der Katalysatorschicht ermöglichen, der Brennstoffzelle mechanische Stabilität verleihen und einen guten elektrischen Kontakt herstellen. Sie wird deshalb manchmal auch als Stromsammler ("current collector") bezeichnet. Eine Gasverteilungsstruktur mit einer darauf angebrachten Katalysatorschicht wird häufig auch als eine Gasdiffusionselektrode bezeichnet. Die Gasverteilungsstruktur kann dabei auch mehrere unterschiedliche aufeinander angeordnete Unterstrukturen umfassen. Üblicherweise bestehen die Gasverteilungsstrukturen aus gasdurchlässigen Strukturen auf Kohlenstoffbasis, wie z.B. Kohlefaserpapier oder Kohlenstoffgewebe, oder anderen poröse Strukturen, die die oben genannten Anforderungen erfüllen.

Ausgehend hiervon ist es Aufgabe der vorliegenden Erfindung, bei einer Brennstoffzellenvorrichtung mit mehreren Kaskadenstufen eine gute Funktionsfähigkeit auch bei einer längeren Betriebsdauer zu gewährleisten.

Diese Aufgabe wird gelöst durch eine Brennstoffzellenvorrichtung der eingangs genannten Art, die erfindungsgemäß einen in der Gaszuführung angeordneten Filter zur Abtrennung freigesetzter Bestandteile der Gasverteilungsstrukturen von Brennstoffzellen der in Strömungsrichtung des Betriebsgases vorhergehenden Kaskadenstufe(n) aus dem Betriebgas aufweist. Der Erfindung liegt hierbei die Erkenntnis zugrunde, dass die üblicherweise für die Gasverteilungsstrukturen verwendeten gasdurchlässigen Strukturen auf Kohlenstoffbasis, wie z.B. Kohlefaserpapier oder Kohlenstoffgewebe, oder andere poröse Strukturen bei einem längeren Betrieb der Brennstoffzellenvorrichtung mechanisch degradieren können, so dass sich Bestandteile freisetzen und von dem Betriebsgas weggetragen werden können. Die freigesetzten Bestandteile (z.B. Partikel, Fasern) können sich dann in Brennstoffzellen nachfolgender Kaskadenstufen oder in dazwischen angeordneten Gaszuführungen ablagern und hierdurch die Versorgung dieser Brennstoffzellen mit Betriebsgasen beeinträchtigen. Dies kann insbesondere im Fall kaskadierter Brennstoffzelleneinrichtungen, bei denen eine abnehmende Anzahl nachfolgender Brennstoffzellen von einer vergleichsweise größeren Anzahl vorhergehender Brennstoffzellen mit Betriebsgas versorgt werden, zu Leistungseinbußen zu führen. Durch den erfindungsgemäß vorgesehenen Filter werden jedoch die freigesetzten Bestandteile der Gasverteilungsstrukturen aus dem Betriebsgas entfernt, so dass Ablagerungen in nachfolgenden Kaskadenstufen und somit Funktionseinbußen vermieden werden können. Es kann dabei sowohl ein Filter in der anodenseitigen als auch in der kathodenseitigen Gaszuführung angeordnet werden.

Bevorzugt weist der Filter ein Filtergewebe mit einer Maschenweite von 5 - 200 µm, insbesondere von 100 µm auf. Wie sich herausgestellt hat, können hierdurch die meisten der freigesetzten Bestandteile der Gasverteilungsstrukturen zuverlässig aus dem Betriebgas entfernt werden und dabei Druckverluste in der Gaszuführung noch gering gehalten werden.

Zur mechanischen Stabilisierung umfasst der Filter von Vorteil zusätzlich noch ein Stützgewebe mit einer Maschenweite von 0.5 - 5 mm, insbesondere von 2 mm, an dem das Filtergewebe befestigt ist.

Der Filter besteht dabei bevorzugt aus einem nichtrostenden Stahl, wodurch eine gute mechanische Stabilität und gute Beständigkeit gegen die in den Betriebgasen vorhandenen Reaktionsmedien ermöglicht wird.

Wenn in der Gaszuführung ein Wasserabscheider angeordnet ist, ist der Filter in Strömungsrichtung des Betriebsgases von Vorteil erst nach dem Wasserabscheider angeordnet. Hierdurch kann eine Korrosion des Filters durch einen Kontakt mit Wasser, das mit dem Betriebsgas mitgetragen wir, vermieden werden.

Gemäß einer alternativen, besonders vorteilhaften Ausgestaltung ist der Filter an einem Auslass des Wasserabscheiders für das Betriebsgas angeordnet. Hierdurch kann zum einen eine Korrosion des Filters durch den Kontakt mit Wasser vermieden werden. Zum anderen kann der in einem Wasserabscheider üblicherweise vorhandene Raum für den Einbau des Filters genutzt werden, so dass kein Eingriff in Leitungsverbindungen für das Betriebsgas zwischen den beiden Kaskadenstufen und kein zusätzlicher Einbauraum notwendig ist.

Von besonderem Vorteil ist hierbei die Oberfläche des Filters größer als die Querschnittsfläche des Auslasses des Wasserabscheiders für das Betriebsgas. Durch eine derartig vergrößerte Oberfläche kann die Zeit bis zu einem Zusetzen des Filters mit den abgetrennten Bestandteilen und einem damit einhergehenden Druckverlust und somit die Zeit bis zu einem Austausch des Filters vergrößert werden.

Bevorzugt ist der Wasserabscheider in eine Endplatte der Brennstoffzellenvorrichtung integriert, wobei die Endplatte eine verschließbare Öffnung für ein Einführen und Ausführen des Filters in bzw. aus dem Wasserabscheider aufweist. Über die verschließbare Öffnung kann der Filter einfach ausgetauscht oder bei Bedarf auch nachgerüstet werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Brennstoffzellenvorrichtung mit vier Kaskaden- stufen,
- FIG 2: den Aufbau einer Brennstoffzelle in den Kaskaden- stufen von FIG 1,
- FIG 3: die Struktur eines Filters für freigesetzte Be- standteile von Gasverteilungsstrukturen,
- FIG 4: einen in eine Endplatte integrierten Wasserabschei- der mit einem integrierten Filter,
- FIG 5: eine Detailansicht des Filters von FIG 4,
- FIG 6: eine Draufsicht auf den Filter von FIG 4,
- FIG 7: eine Seitenansicht des Filters von FIG 4,
- FIG 8: eine perspektivische Darstellung des Filters von FIG 4,
- FIG 9: eine weitere Ausführungsform eines in einen Wasser- abscheider integrierten Filters,
- FIG 10: eine Draufsicht auf den Filter von FIG 9 und
- FIG 11: eine Seitenansicht des Filters von FIG 9.

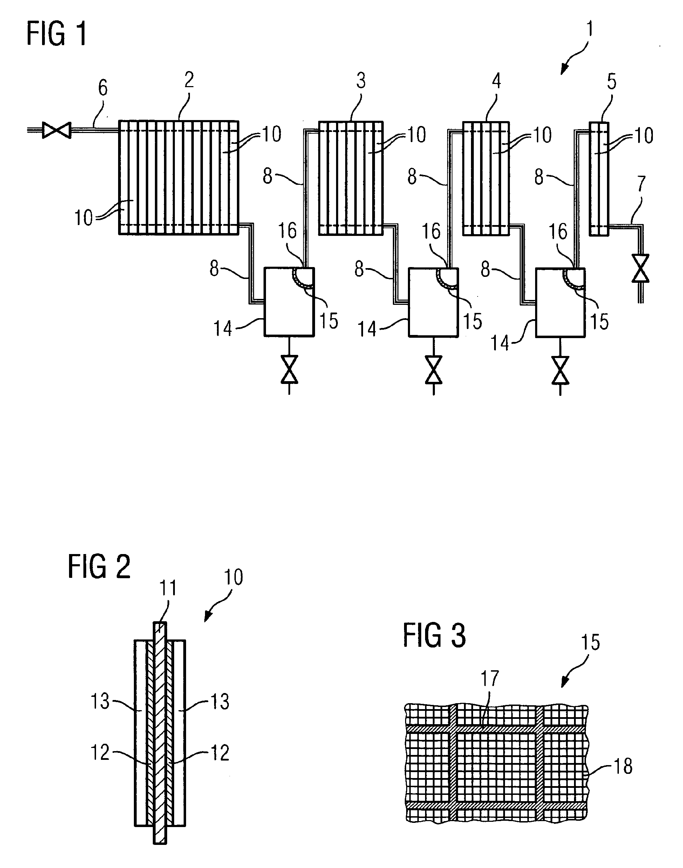

FIG 1 zeigt eine Brennstoffzellenvorrichtung 1 mit vier kaskadiert angeordneten Kaskadenstufen 2, 3, 4, 5. Über eine Frischgaszuleitung 6 wird der ersten Kaskadenstufe 2 ein Betriebsgas, z.B. reiner Wasserstoff oder Sauerstoff, zugeführt. Die Kaskadenstufen 2, 3, 4, 5 werden anschließend nacheinander von dem Betriebsgas durchströmt. In den Brennstoffzellen 10 der Kaskadenstufen 2, 3, 4, 5 wird das Betriebsgas teilweise verbraucht, wobei durch die chemische Reaktion von Wasserstoff (H₂) und Sauerstoff (O₂) in den Brennstoffzellen 10, die vorzugsweise als PEM-Brennstoffzellen ausgeführt sind (Polymer Elektrolyt Membran Brennstoffzellen), Wasser (sogenanntes Produktwasser) entsteht.

Die erste Kaskadenstufe 2 umfasst eine Vielzahl von Brennstoffzellen 10, die zu einem Brennstoffzellenblock zusammengefügt sind. Die zweite Kaskadenstufe 3 umfasst weit weniger, ebenfalls zu einem Brennstoffzellenblock zusammengefügte Brennstoffzellen 10, und die dritte Kaskadenstufe 4 umfasst noch weniger Brennstoffzellen 10. Die letzte Kaskadenstufe 5 umfasst lediglich einige als Spülzellen ausgeführte Brennstoffzellen 10, in denen sich Inertgase, sonstige nicht verbrauchbare Gasbestandteile und Wasser sammeln, die über eine Leitung 7 zyklisch abgeführt werden können.

In Strömungsrichtung des Betriebsgases gesehen ist von einer vorhergehende Kaskadenstufe zu einer nachfolgenden Kaskadenstufe stets eine Gaszuführung 8 geführt, über die das aus der vorhergehenden Kaskadenstufe austretende Betriebsgas der nachfolgenden Kaskadenstufe wieder zugeführt wird.

In der Gaszuführung 8 ist dabei ein Wasserabscheider 14 angeordnet, der dazu dient, in der Gaszuführung 8 mit dem Betriebsgas mitgeführtes Produktwasser und auskondensiertes Befeuchtungswasser aus dem Betriebsgas abzuscheiden, bevor das Betriebsgas der nächsten Kaskadenstufe zugeführt wird.

Wie in FIG 2 dargestellt, umfassen die Brennstoffzellen 10 dabei jeweils einen ionendurchlässigen Elektrolyten 11 (im Fall eine PEM-Brennstoffzelle eine Polymerelektrolyt-Membran), zu beiden Seiten jeweils eine Katalysatorschicht 12 und auf dieser wiederum folgend jeweils eine Gasverteilungsstruktur 13. Die Gasverteilungsstruktur 13 dient dazu, das jeweilige Betriebsgas (wasserstoffhaltiges oder sauerstoffhaltiges Gas) zu der angrenzenden Katalysatorschicht 12 zu bringen, das Ausbringen von Wasser und Inertgasen von der Katalysatorschicht zu ermöglichen, der Brennstoffzelle mechanische Stabilität zu verleihen und einen guten elektrischen Kontakt herzustellen. Die Gasverteilungsstrukturen 13 bestehen üblicherweise aus gasdurchlässigen Strukturen auf Kohlenstoffbasis, wie z.B. Kohlefaserpapier oder Kohlenstoffgewebe, oder anderen poröse Strukturen.

Bei einem längeren Betrieb der Brennstoffzellenvorrichtung können die Gasverteilungsstrukturen 13 mechanisch degradieren, so dass sich Bestandteile freisetzen und von dem Betriebsgas mitgetragen werden. Die freigesetzten Bestandteile (z.B. Partikel, Fasern) können sich dann in den Brennstoffzellen 10 einer nachfolgenden Kaskadenstufe oder in dazwischen angeordneten Gaszuführungen ablagern und hierdurch die Versorgung nachfolgender Kaskadenstufen mit Betriebsgasen beeinträchtigen.

Um dem entgegen zu wirken, ist in jeder der Gaszuführungen 8 ein Filter 15 zur Abtrennung freigesetzter Bestandteile der Gasverteilungsstrukturen 13 von Brennstoffzellen 10 der in Strömungsrichtung des Betriebsgases vorhergehenden Kaskadenstufe(n) aus dem Betriebgas angeordnet. Hierdurch können Ablagerungen in nachfolgenden Kaskadenstufen vermieden werden und somit eine gute Betriebsgasversorgung aufrechterhalten werden.

Der Filter 15 ist dabei an einem Auslass 16 des Wasserabscheiders 14 für das Betriebsgas angeordnet. Die Oberfläche des Filters 13 ist dabei größer ist als die Querschnittsfläche des Auslasses 16 des Wasserabscheiders 14.

Der Filter 15 weist dabei - wie in FIG 3 dargestellt - zum einen für die mechanische Stabilität ein Stützgewebe 17 mit Maschen mit einer Maschenweite von 0.5 - 5 mm, insbesondere 2 mm, auf. An dem Stützgewebe 17 ist das eigentliche Filtergewebe 18 für die Filterwirkung befestigt, wobei das Filtergewebe 18 Maschen mit einer Maschenweite von 5 - 200 µm, insbesondere 100 µm aufweist. Hierdurch können die meisten freigesetzten Bestandteile der Gasverteilungsstrukturen 13 zuverlässig aus dem Betriebgas entfernt werden und dabei Druckverluste in der Gaszuführung 8 gering gehalten werden.

Sowohl das Stützgewebe 17 als auch das Filtergewebe 18 bestehen bevorzugt aus einem nichtrostenden Stahl.

Eine noch weitergehende Vergrößerung der Filteroberfläche ist dadurch möglich, dass der Filter 15 eine oberflächenvergrö-ßernde Struktur (z.B. eine Lamellenstruktur) aufweist.

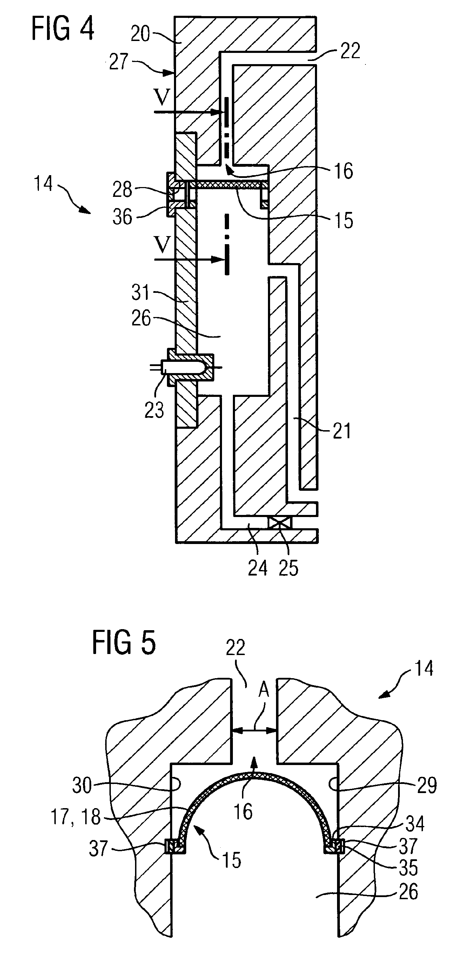

Wie in FIG 4 dargestellt, ist der Wasserabscheider 14 von Vorteil vollständig in eine Endplatte 20 der Brennstoffzellenvorrichtung integriert. Die Gaszuführung 8 umfasst dabei einen von einer vorhergehenden Kaskadenstufe zu dem Wasserabscheider 14 geführten ersten Verbindungskanal 21, über den das aus der vorhergehenden Kaskadenstufe austretende Betriebsgas dem Wasserabscheider 14 zugeführt wird. Der Verbindungskanal 21 kann dabei auch in Form eines Rohres in den Innenraum 26 des Wasserabscheiders 14 geführt sein. Weiterhin umfasst die Gaszuführung 8 einen von dem Wasserabscheider 14 zu der nachfolgenden Kaskadenstufe geführten zweiten Verbindungsskandal 22 zur Zufuhr des in dem Wasserabscheider 14 von Wasser befreiten Betriebsgases zu der nachfolgenden Kaskadenstufe.

Der Wasserabscheider 14 umfasst außerdem einen Wasserstandssensor 23, der ebenfalls vollständig in die Endplatte 20 integriert ist, und einen Entleerungskanal 24, in dem ein Ventil 25 angeordnet ist. Zusätzlich können im Innenraum 26 des Wasserabscheiders 14 noch ein oder mehrere nicht näher dargestellte Strömungsführungselemente (z.B. Leitbleche oder Prallbleche) angeordnet sein.

Steigt der Wasserpegel des sich im unteren Teil des Wasserabscheiders 14 angesammelten Wassers über einen vorgegebenen Pegel, so gibt der Wasserstandsensor 23 ein Signal an eine in FIG 4 nicht näher gezeigte Steuereinheit, die daraufhin das Öffnen des Ventils 25 auslöst. Hierdurch erfolgt eine Entleerung des Wasserabscheiders 14 vom Wasser über den Entleerungskanal 24.

Die Endplatte 20 ist auf der mit dem Bezugszeichen 27 versehenen Seite für Wartungspersonal zugänglich und weist an dieser Seite 27 eine mit einer Kappe 36 verschließbare Öffnung 28 auf, durch die für das Wartungspersonal ein einfaches Einführen und Ausführen des Filters 15 in bzw. aus dem Wasserabscheider 14 und somit ein einfacher Austausch des Filters 15 möglich ist.

Der Filter 15 ist im Innenraum 26 des Wasserabscheiders 14 an einem Auslass 16 des Wasserabscheiders 14 für das Betriebsgas, d.h. vor dem Eingang des zweiten Verbindungskanals 22, derart angeordnet, dass das gesamte den Wasserabscheider 14 über den zweiten Verbindungskanal 22 verlassende Betriebsgas durch den Filter 15 strömen muss. Der Filter 15 wird hierzu zum einen durch die auf der Seite 27 angeordnete Seitenwand 31 des Wasserabscheiders 14 in der gewünschten Position am Auslass 16 des Wasserabscheiders 14 gehalten und zum anderen durch die Seitenwände 29, 30 des Wasserabscheiders 14 gehalten und abgedichtet (siehe auch FIG 5).

Wie in der Detailansicht von FIG 5 dargestellt, die vereinfacht einen Schnitt durch den Auslass 16 und den Filter 15 entlang der in FIG 4 mit V bezeichneten Linie zeigt, ist die Oberfläche des Filters 15 größer als die Querschnittsfläche A des Auslasses 16 des Wasserabscheiders 14 bzw. des Eingangs des zweiten Verbindungskanals 22. Hierdurch kann die Zeit bis zu einem Zusetzen des Filters 15 mit abgetrennten Bestandteilen der Gastverteilerstrukturen und somit die Zeit bis zu einem Austausch des Filters 15 lang gehalten werden.

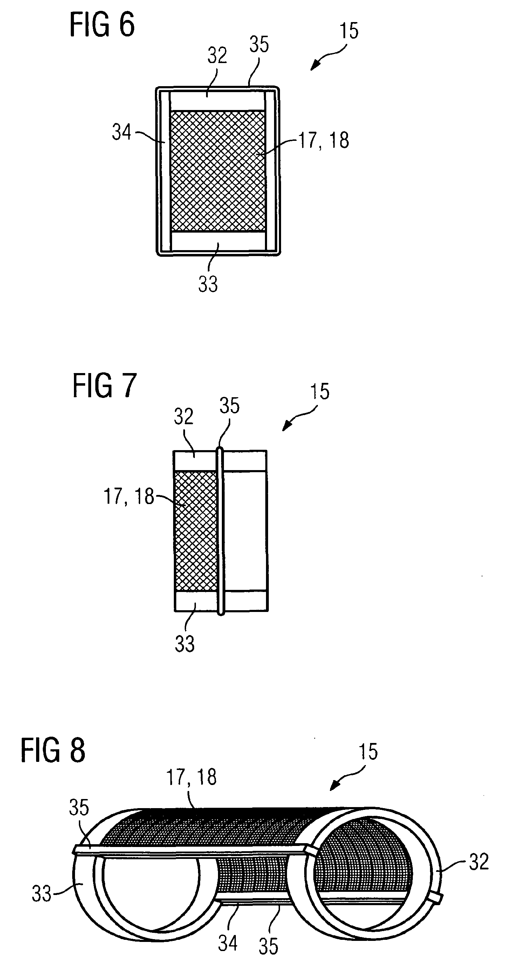

Wie in der Draufsicht von FIG 6, der Seitenansicht von FIG 7 und der perspektivischen Darstellung von FIG 8 gezeigt, umfasst der Filter 15 neben dem bereits im Zusammenhang mit FIG 3 erläuterten Filtergewebe 18 und Stützgewebe 17, die in Längsrichtung des Filters einen halbrunden Querschnitt aufweisen, zusätzlich noch in Längsrichtung an seinem einen Ende einen Filterkopf 32 und an seinem anderen Ende einen Filterboden 33 mit jeweils rundem Querschnitt, sowie einen zwischen dem Filterkopf 32 und dem Filterboden 33 verlaufenden stegförmigen Rahmen 34. Das Filtergewebe 18 und das Stützgewebe 17 sind dabei zwischen dem Filterkopf 32, dem Filterboden 33 und dem Rahmen 34 gehalten. Der Rahmen 34 und eine vorzugsweise daran angebrachte Dichtung 35 dienen auch zur Abdichtung des Filters 15 gegenüber den Seitenwänden 29, 30 des Wasserabscheiders 14. Hierzu ist in jede der Seitenwände 29, 30 eine Nut 37 eingebracht, in welche der stegförmige Rahmen 34 mit der Dichtung 35 greift. Die Nut 37 dient darüber hinaus beim Einführen des Filters in den Wasserabscheider 14 für eine korrekte Führung des Filters 15 in die gewünschte Einbaulage und beim anschließenden Betrieb der Brennstoffzellen für eine korrekte Positionierung des Filters 15 im Wasserabscheider 14.

Auch der Filterkopf 32, der Filterboden 33 und der Rahmen 34 bestehen bevorzugt aus einem nichtrostenden Stahl.

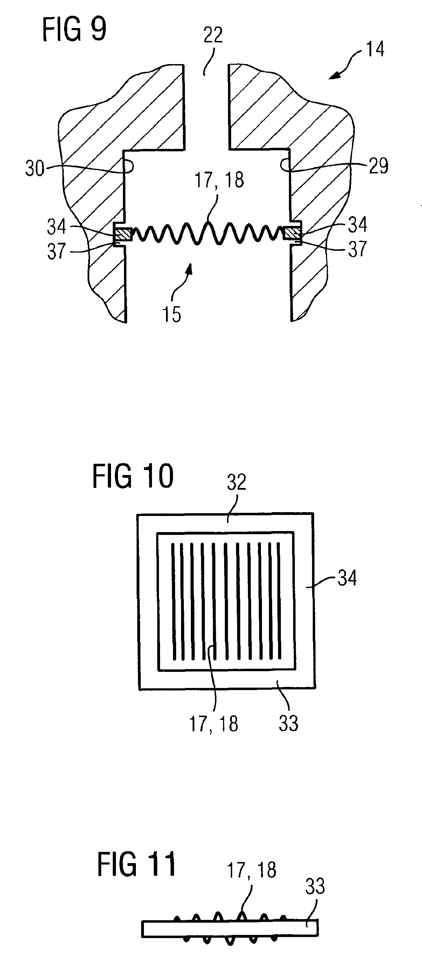

Ein in FIG 9 - 11 gezeigter besonders einfach fertigbarer Filter 15 hat keinen halbrunden, sondern einen im Wesentlichen ebenen Querschnitt. Zur Vergrößerung der Filterfläche besteht das Filtergewebe 18, vorzugsweise auch ein eventuell vorhandenes Stützgewebe 17, aus einem gefalteten (plissierten) Gewebe. Dieses Gewebe besteht von Vorteil aus Edelstahl. Im Vergleich zu dem in FIG 4 - 8 dargestellten Filter funktionsgleiche Bauteile sind in FIG 9 - 11 mit den gleichen Bezugszeichen versehen.

Grundsätzlich sind jedoch auch andere Filterformen möglich.

## Patentansprüche

1. Brennstoffzellenvorrichtung (1) mit mehreren nacheinander von einem Betriebsgas durchströmten Kaskadenstufen (2, 3, 4, 5) mit Brennstoffzellen (10), die jeweils eine von dem Betriebsgas durchströmte Gasverteilungsstruktur (13) umfassen, und mit einer von einer vorhergehenden Kaskadenstufe (2) zu einer nachfolgenden Kaskadenstufe (3) geführten Gaszuführung (8) für das Betriebsgas,
**gekennzeichnet durch** einen in der Gaszuführung (8) angeordneten Filter (15) zur Abtrennung freigesetzter Bestandteile der Gasverteilungsstrukturen (13) von Brennstoffzellen (10) der in Strömungsrichtung des Betriebsgases vorhergehenden Kaskadenstufe(n) (2) aus dem Betriebgas.

2. Brennstoffzellenvorrichtung (1) nach Anspruch 1,
**dadurch gekennzeichnet, dass** der Filter (15) ein Filtergewebe (18) mit Maschen mit eine Maschenweite von 5 - 200 µm, insbesondere von 100 µm, umfasst.

3. Brennstoffzellenvorrichtung (1) nach Anspruch 2,
**dadurch gekennzeichnet, dass** der Filter (15) zur mechanischen Stabilisierung zusätzlich ein Stützgewebe (17) mit Maschen mit einer Maschenweite von 0.5 - 5 mm, insbesondere von 2 mm, umfasst, an dem das Filtergewebe (18) befestigt ist.

4. Brennstoffzellenvorrichtung (1) nach einem der vorhergehenden Ansprüche, **dadurch gekennzeichnet, dass** der Filter (15) aus einem nichtrostenden Stahl besteht

5. Brennstoffzellenvorrichtung (1) nach einem der vorhergehenden Ansprüche, **dadurch gekennzeichnet, dass** in der Gaszuführung (8) ein Wasserabscheider (14) angeordnet ist, wobei der Filter (15) in Strömungsrichtung des Betriebsgases nach dem Wasserabscheider (14) angeordnet ist.

6. Brennstoffzellenvorrichtung (1) nach einem der Ansprüche 1 bis 4, **dadurch gekennzeichnet, dass** in der Gaszuführung (8) ein Wasserabscheider (14) angeordnet ist, wobei der Filter (15) in Strömungsrichtung des Betriebsgases an einem Auslass (16) des Wasserabscheiders (14) für das Betriebsgas angeordnet ist.

7. Brennstoffzellenvorrichtung (1) nach Anspruch 6,
**dadurch gekennzeichnet, dass** die Oberfläche des Filters (15) größer ist als die Querschnittsfläche (A) des Auslasses (16) des Wasserabscheiders (14) für das Betriebsgas.

8. Brennstoffzellenvorrichtung (1) nach einem der Ansprüche 6 bis 7, **dadurch gekennzeichnet, dass** der Wasserabscheider (14) in eine Endplatte (20) der Brennstoffzellenvorrichtung (1) integriert ist, wobei die Endplatte (20) eine verschließbare Öffnung (28) für ein Einführen und Ausführen des Filters (15) in bzw. aus dem Wasserabscheider (14) aufweist.

## Claims

1. Fuel cell assembly (1) having a plurality of cascade stages (2, 3, 4, 5) through which an operating gas flows in succession and which have fuel cells (10), each comprising a gas distribution structure (13) through which the operating gas flows, and having a gas supply (8) for the operating gas which is routed from a preceding cascade stage (2) to a subsequent cascade stage (3), **characterised by** a filter (15) arranged in the gas supply (8) for separating out from the operating gas released constituents of the gas distribution structures (13) of fuel cells (10) of the preceding cascade stage(s) in the flow direction of the operating gas.

2. Fuel cell assembly (1) according to claim 1,
**characterised in that** the filter (15) comprises a filter fabric (18) having meshes with a mesh width of 5 - 200 µm, in particular of 100 µm.

3. Fuel cell assembly (1) according to claim 1,
**characterised in that** for mechanical stabilisation the filter (15) additionally comprises a supporting fabric (17) having meshes with a mesh width of 0.5 - 5 mm, in particular of 2 mm, on which the filter fabric (18) is affixed.

4. Fuel cell assembly (1) according to one of the preceding claims, **characterised in that** the filter (15) is made of a rust-resistant steel.

5. Fuel cell assembly (1) according to one of the preceding claims, **characterised in that** a water separator (14) is arranged in the gas supply (8), wherein the filter (15) is arranged downstream of the water separator (14) in the flow direction of the operating gas.

6. Fuel cell assembly (1) according to one of claims 1 to 4, **characterised in that** a water separator (14) is arranged in the gas supply (8), wherein the filter (15) is arranged in the flow direction of the operating gas at an outlet (16) of the water separator (14) for the operating gas.

7. Fuel cell assembly (1) according to claim 6, **characterised in that** the surface area of the filter is greater than the cross-sectional area (A) of the outlet (16) of the water separator (14) for the operating gas.

8. Fuel cell assembly (1) according to one of claims 6 to 7, **characterised in that** the water separator (14) is integrated into an end plate (20) of the fuel cell assembly (10), wherein the end plate (20) has a closable opening (28) for inserting and extracting the filter (15) into and out of the water separator (14).

## Revendications

1. Dispositif ( 1 ) de piles à combustible ayant plusieurs étages ( 2, 3, 4, 5 ) en cascade, parcourus l'un après l'autre par un gaz de fonctionnement, de piles ( 10 ) à combustible, qui comprennent respectivement une structure ( 13 ) de répartition du gaz parcourue par le gaz de fonctionnement, et ayant un apport ( 8 ) du gaz de fonctionnement passant d'un étage ( 2 ) en cascade précédent à un étage ( 3 ) en cascade suivant,
**caractérisé par** un filtre ( 15 ) monté dans l'apport ( 8 ) de gaz et destiné à séparer du gaz de fonctionnement des constituants libérés des structures ( 13 ) de répartition de gaz de piles ( 10 ) à combustible de la cascade précédente ou des cascades ( 2 ) précédentes dans le sens d'écoulement du gaz de fonctionnement.

2. Dispositif ( 1 ) de pile à combustibles suivant la revendication 1, **caractérisé en ce que** le filtre ( 15 ) comprend un tissu ( 18 ) filtrant ayant des mailles d'une dimension de 5 à 200 µm, notamment de 100 µm.

3. Dispositif ( 1 ) de piles à combustible suivant la revendication 2, **caractérisé en ce que** le filtre ( 15 ) comprend pour la stabilisation mécanique, en outre, un tissu ( 17 ) d'appui ayant des mailles d'une dimension de 0,5 à 5 mm, notamment de 2 mm, auquel le tissu ( 18 ) filtrant est fixé.

4. Dispositif ( 1 ) de piles à combustible suivant l'une des revendications précédentes, **caractérisé en ce que** le filtre ( 15 ) est en un acier inoxydable.

5. Dispositif ( 1 ) de piles à combustible suivant l'une des revendications précédentes, **caractérisé en ce que** dans l'apport ( 8 ) de gaz est monté un séparateur ( 14 ) d'eau, le filtre étant monté après le séparateur ( 14 ) d'eau dans le sens d'écoulement du gaz de fonctionnement.

6. Dispositif ( 1 ) de piles à combustible suivant l'une des revendications 1 à 4, **caractérisé en ce que** dans l'apport ( 8 ) de gaz est monté un séparateur ( 14 ) d'eau, le filtre étant monté dans le sens d'écoulement de gaz de fonctionnement sur une sortie ( 16 ) du séparateur ( 14 ) d'eau pour le gaz de fonctionnement.

7. Dispositif ( 1 ) de piles à combustible suivant la revendication 6, **caractérisé en ce que** la surface du filtre ( 15 ) est plus grande que la surface ( A ) de section transversale de la sortie ( 16 ) du séparateur ( 14 ) d'eau pour le gaz de fonctionnement.

8. Dispositif ( 1 ) de piles à combustible suivant l'une des revendications 6 à 7, **caractérisé en ce que** le séparateur ( 14 ) d'eau est intégré dans une plaque ( 20 ) d'extrémité du dispositif ( 1 ) de piles à combustible, la plaque ( 20 ) d'extrémité ayant une ouverture ( 28 ) pouvant être fermée pour faire entrer le filtre ( 15 ) dans le séparateur ( 15 ) d'eau et l'en faire sortir.
